(19) Europäisches Patentamt
European Patent Office
Office européen des brevets

(11) Numéro de publication: **0 323 777 A1**

(12) **DEMANDE DE BREVET EUROPEEN**

(21) Numéro de dépôt: 88403232.7

(22) Date de dépôt: 19.12.88

(51) Int. Cl.4: B23Q 1/26, B24B 41/04, F16C 35/12, F16C 25/06, B23Q 1/08

(30) Priorité: 22.12.87 FR 8717874

(43) Date de publication de la demande: 12.07.89 Bulletin 89/28

(84) Etats contractants désignés: AT BE CH DE ES FR GB GR IT LI LU NL SE

(71) Demandeur: SOCIETE DE MECANIQUE DE PRECISION (PAR ABREVIATION " S.M.P.R.") SOCIETE ANONYME DITE :
15, rue de Verdun
F-94170 Le Perreux sur Marne(FR)

(72) Inventeur: Watelet, Luc
15 rue de Verdun
F-94170 Le Perreux sur Marne(FR)

(74) Mandataire: Lhuillier, René et al
ARMENGAUD JEUNE CABINET LEPEUDRY 6, rue du Fg. St-Honoré
F-75008 Paris(FR)

(54) **Broche d'entraînement en rotation à grande vitesse d'un outil de précision.**

(57) Le corps de broche tournant 4 est en forme de cylindre dont la face interne vient en appui sur une pluralité d'organes de roulement 3 emmanchés de façon régulièrement répartie sur toute la longueur d'un arbre central 2 coaxial audit corps de broche, et fixe par rapport au bâti, des entretoises 10 et 11 étant prévues entre les organes de roulement voisins, une bague de serrage 12, 13 assurant la précharge des roulements. L'arbre central est muni de conduits 5, 9 pour l'injection en surpression, de fluide de graissage aux roulements.

Application aux broches de diamantage de précision pour rectification à grande vitesse.

FIG.1

EP 0 323 777 A1

Xerox Copy Centre

# Broche d'entraînement en rotation d'un outil de précision notamment broche porte-molette de diamantage pour fonctionnement à grande vitesse.

L'invention a pour objet une broche d'entraînement en rotation d'un outil de précision notamment une broche porte-molette de diamantage ou d'impression pour la rectification et la mise au profil à grande vitesse, et concerne plus précisément le montage de la broche tournante sur un arbre central fixe par l'intermédiaire d'organes de roulement.

Dans le domaine de la rectification, les broches porte-molette utilisées sont de façon connue des pièces rigides qui tournent dans des paliers entre deux éléments d'un bâti, et qui sont entraînées par une des leurs extrémités, par un moteur. Quand il s'agit d'assurer la rectification ou la mise au profil à grande vitesse à l'aide d'une molette diamantée, pour que la précision du produit rectifié meulé soit supérieure à celle obtenue avec une broche classique, il faut que ladite broche présente une excellente rigidité, que son guidage en rotation soit assuré avec précision en tenant compte de l'usure des organes de roulement et que le graissage des pièces tournantes soit assuré correctement ainsi que l'étanchéité quelles que soient les conditions de fonctionnement. Ces qualités n'étant pas obtenues avec les broches connues, l'invention vise à proposer une broche d'entraînement notamment une broche porte-molette qui autorise des performances de vitesses améliorées, qui reste maniable et interchangeable d'une machine à l'autre et qui évite les inconvénients inhérents aux broches connues.

Par conséquent un objet de la présente invention, consiste en une broche d'entraînement en rotation d'un outil de précision notamment pour fonctionnement à grande vitesse entre pointes fixes ou autres comportant un corps de broche tournant monté par l'intermédiaire de roulements sur au moins un support fixe solidaire du bâti de la machine, par les pointes fixes, broche selon laquelle le corps de broche tournant est en forme de cylindre dont la face interne vient en appui sur une pluralité d'organes de roulement emmanchés de façon régulièrement répartie sur toute la longueur d'un arbre central coaxial audit corps de broche, et fixe par rapport au bâti, des entretoises étant prévues entre les organes de roulement et étant associées à au moins un moyen assurant la précharge des roulements, l'arbre central étant muni de conduits d'injection en surpression de fluide de graissage aux roulements.

Les chambres annulaires séparant l'arbre du corps de broche, délimitées axialement par deux organes de roulement voisins, servent de logement à une entretoise interne en forme de bague en appui contre la paroi extérieure de l'arbre central et à une entretoise externe en forme de bague en appui contre la paroi intérieure du corps de broche ainsi qu'entre les faces d'appui des roulements.

Selon une caractéristique particulière de l'invention, un moyen complémentaire de précharge automatique compensant l'usure des roulements est assuré par au moins un ressort logé dans une chambre annulaire entre deux organes de roulement voisins, le ressort étant un ressort soufflet, enveloppant l'entretoise interne, en appui d'un côté contre un organe de roulement et de l'autre contre une bague externe réglable axialement, ou le ressort étant logé à l'intérieur d'un manchon coulissant appuyé contre un organe de roulement, est lui-même en appui de l'autre côté contre une bague externe réglable axialement.

D'autres caractéristiques et avantages de l'invention seront mieux compris à l'aide de la description suivante d'exemples non limitatifs de réalisation, faisant référence aux dessins annexés qui représentent :

figure 1 une coupe longitudinale d'une broche selon l'invention ;

figures 2 et 3 des vues partielles de la partie centrale de la coupe selon la revendication 1, montrant des variantes de réalisation ;

figure 4 une coupe longitudinale d'une variante de réalisation ;

figures 5 et 6 des variantes de réalisation de la broche selon la figure 4.

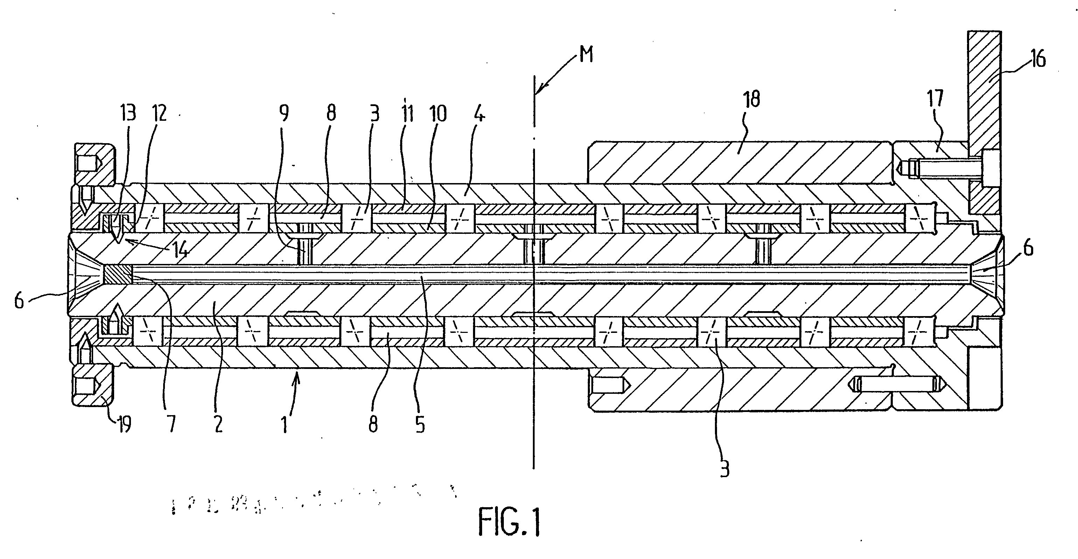

En se reportant tout d'abord à la figure 1 on voit que la broche représentée désignée dans son ensemble par la référence 1, de forme générale cylindrique se compose essentiellement d'un arbre central fixe 2, d'une pluralité d'organes de roulement 3, répartis sur toute la longueur de l'arbre symétriquement de part et d'autre de son plan médian transversal M, et d'un corps de broche 4 formant un cylindre tournant dont la face interne vient en appui sur les organes de roulement 3. L'arbre central 2 est traversé sur toute sa longueur d'un conduit axial 5 débouchant à ses deux extrémités par un orifice évasé 6 de forme conique, une des extrémités étant fermée par un bouchon 7, tandis que l'autre est reliée par des moyens non représentés à un dispositif d'injection de brouillard d'huile qui est distribué à partir du conduit 5 grâce à des petits conduits de distribution 9, vers les chambres annulaires 8 séparant l'arbre 2 du corps de broche 4, chambres délimitées axialement par deux organes de roulement 3 voisins. Grâce à ses orifices évasés 6, l'arbre central 2 est maintenu entre pointes de façon connue.

Les chambres annulaires 8 précitées servent de logement chacune à une entretoise interne 10 et une entretoise externe 11, qui sont en quelque sorte des bagues venant en appui respectivement contre la paroi extérieure de l'arbre central 2 et contre la paroi intérieure du corps de broche 4. Deux organes de roulement voisins 3 sont donc en butée sur ces entretoises intermédiaires, l'empilage des roulements le long de l'arbre, et par suite leur précharge étant assuré par ces séries d'entretoises. Les organes de roulement ici représentés sont au nombre de huit, chacun d'eux étant un roulement à billes à contact oblique, les roulements étant orientés symétriquement par rapport au plan M. La précharge de ces roulements est obtenue par un usinage précis des entretoises externes 11 en ce qui concerne leur dimension axiale par rapport aux entretoises internes 10. La pré charge de l'empilage est également assurée par une bague 12 prévue sur une extrémité de l'arbre central 2 dont la fixation et le réglage en position axiale le long de cet arbre sont assurés par une pluralité de vis radiales 13 à pointe conique portées par la bague dont la pointe coopère avec des évidements coniques 14 ménagés à l'extrémité de l'arbre en correspondance avec lesdites vis, mais légèrement décalés axialement le long de l'arbre 2. Ainsi, lors de la pénétration des pointes de vis 13 dans les évidements 14, du fait de ce décalage, il se produit un effet de came qui tend à plaquer la bague 12 contre le roulement voisin et donc contre l'empilement, sous un effort dosable dépendant du degré de pénétration des vis dans les évidements, pour une surface conique donnée. L'intérêt d'une telle fixation réside dans sa capacité à répartir uniformément, dans un sans circonférentiel, l'effort de blocage et ainsi d'éviter la création de contraintes déséquilibrées pouvant donner naissance à des déformations (faux rond) telles qu'elles apparaissent avec des écrous classiques.

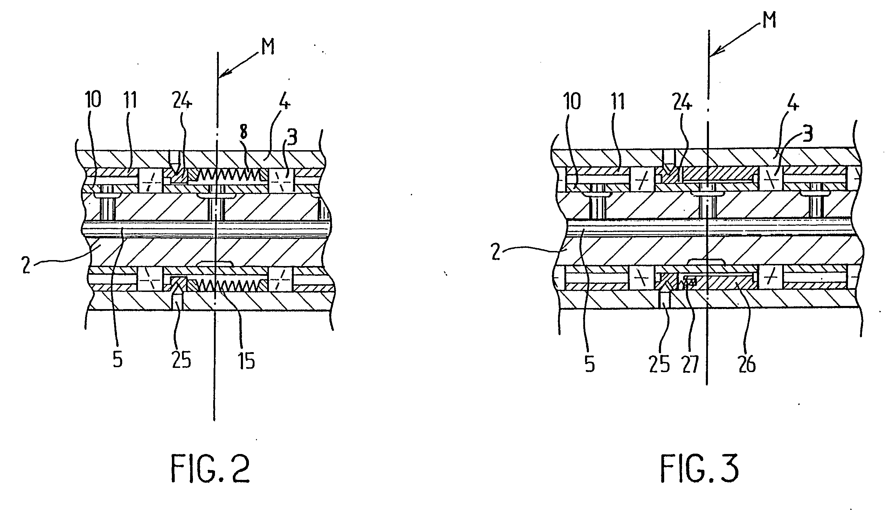

Néanmoins pour parfaire cette précharge on prévoit d'intercaler entre deux roulements voisins un ressort 15 qui assure une précharge automatique supplémentaire composant l'usure des roulements. On voit à la figure 2 que ce ressort est disposé dans la chambre annulaire centrale 8, de part et d'autre du plan médian M. Le ressort est un ressort soufflet qui enveloppe l'entretoise interne 10 et qui se substitue a l'entretoise externe inexistante dans cette chambre centrale. Le ressort 15 est en appui d'un côté contre un roulement 3 et de l'autre contre une bague 24 disposée également à l'intérieur de la chambre et fixée au corps de broche 4 par l'intermédiaire de six pointes coniques de vis 25 coopérant avec des évidements de la bague, de façon décalée comme pour la bague 12, afin de pouvoir régler la position de la bague 24 et la compression du ressort. Une variante de cette réalisation est illustrée à la figure 3, selon laquelle le ressort 15 est remplacé par un manchon coulissant 26 appuyé contre un organe de roulement 3 et incorporant au moins un petit ressort 27 en appui sur la bague 24.

Le corps de broche 4 tourne donc autour de l'arbre central 2 ; il est entraîné en rotation par un toc entraîneur 16 vissé sur une couronne d'extrémité 17 solidaire du corps de broche. En butée contre cette couronne, et fixée à elle par vissage, un manchon 18 coiffe une partie du corps de broche 4 et sert de butée de positionnement à une molette non représentée. A l'autre extrémité du corps de broche 14 est également prévu un écrou 19 de serrage de molette.

Le dessin montre clairement que, sur toute la longueur de la broche, on a ainsi créé une poutre très encastrée, donc de rigidité accrue, qui permet d'encaisser les efforts de coupe sans déformation. L'expérience a montré qu'une telle broche possédait un faux rond de l'ordre du micron c'est-à-dire 5 à 8 fois moins qu'une broche montée classiquement entre deux paliers. Cette qualité est obtenue par le fait que les roulements sont répartis sur une grande portée s'étendant jusque sous l'outil permettant ainsi une grande répartition des efforts transmis entre l'outil et son bâti fixe.

L'injection de brouillard d'huile par les conduits (5, 9) vers les chambres annulaires 8, et par conséquent vers les organes de roulement 3, permet un graissage permanent qui améliore leur longévité. En outre ce brouillard étant admis sous pression, de l'intérieur vers l'extérieur s'oppose à la pénétration des fluides environnants ce qui permet de travailler une pièce par exemple sous aspersion sans risquer la pénétration de fluide à l'intérieur du corps de broche ni par conséquent la détérioration du système de roulements.

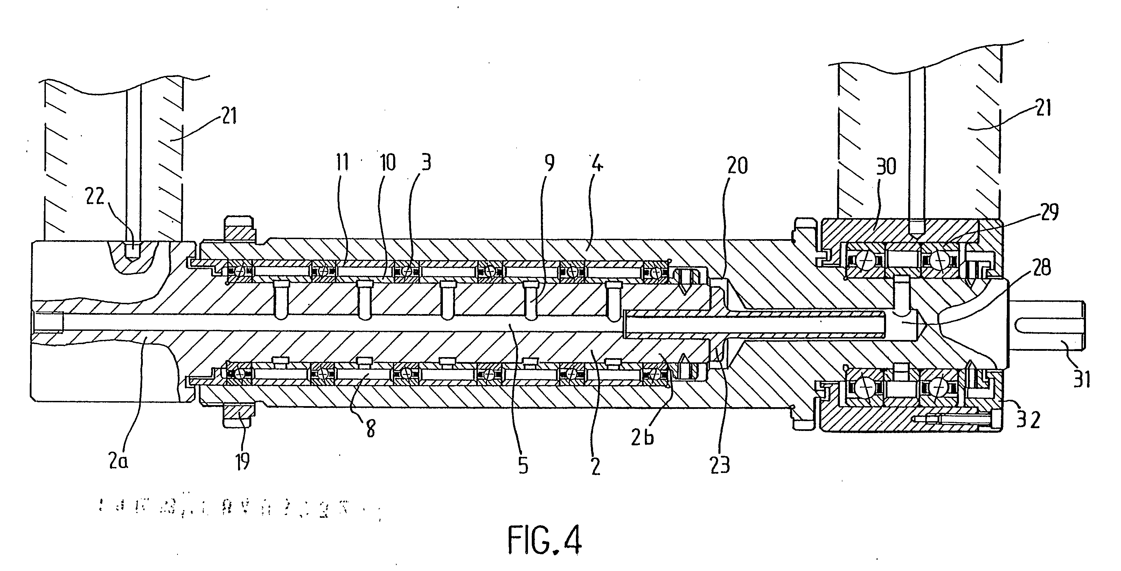

La figure 4 illustre une autre variante de réalisation de l'invention dans laquelle les mêmes références désignent les mêmes éléments. Dans cette variante, l'arbre central fixe 2 s'étend sur presque toute la longueur du corps de broche 4, à l'intérieur d'un alésage central 20 prévu dans ce dernier. Une extrémité 2a de l'arbre 2 est solidaire d'un élément de bâti fixe 21 par l'intermédiaire d'un pion d'immobilisation 22. L'arbre central ainsi maintenu par une seule de ses extrémités reçoit aussi un conduit intérieur 5 et des conduits de distribution 9 pour le brouillard d'huile. L'extrémité opposée 2b de l'arbre porte un guide 23 qui prolonge le conduit 5 et s'étend à l'intérieur d'une chambre 28 coaxiale au corps de broche 4. La chambre 28 communique avec un palier 29 comportant deux roulements à billes à contact oblique, fortement préchargés, ledit palier étant logé dans un support 30 solidaire du bâti 21 de la machine ; dans ce palier vient se positionner l'extrémité 4b du corps de broche qui porte par ailleurs une fourchette d'entraînement 31 ou un axe porte poulie. D'autre part une chicane d'obturation 32, rapportée sur le support 30, ferme le palier 29.

Comme dans le cas précédent, le brouillard d'huile est injecté par les conduits 9 vers les roulements, et par le guide 23 vers le palier 29. Sa surpression évite la pénétration dans le broche des liquides ou poussières qui pourraient y pénétrer notamment par les petits espacements séparant le corps de broche 4 du support fixe 30.

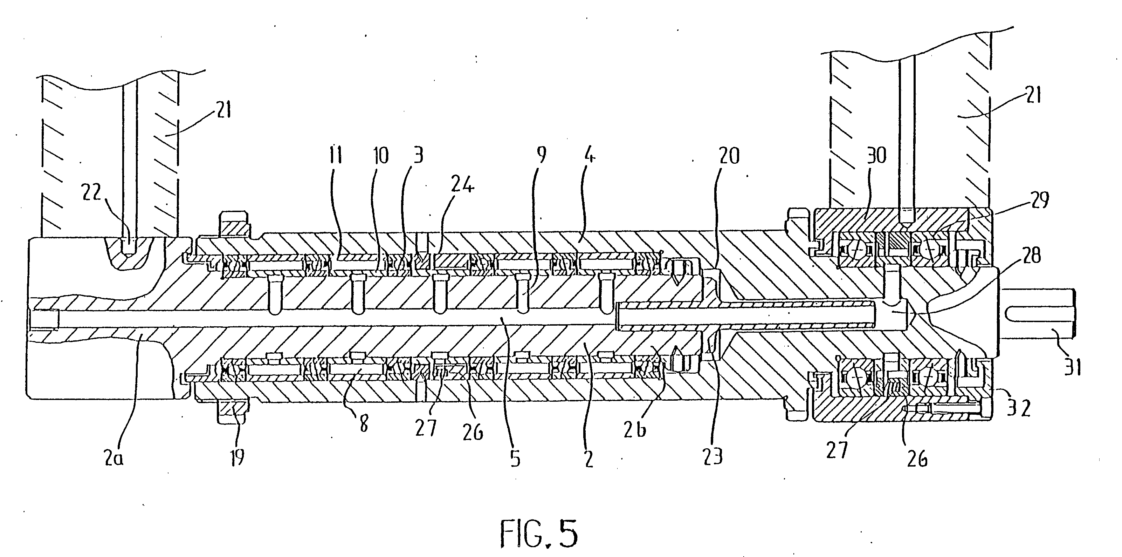

La broche décrite en référence à la figure 4, peut être aussi équipée d'un dispositif de précharge automatique comme l'illustre la figure 3. La figure 5 montre ainsi un manchon coulissant 26 incorporant le petit ressort 27 en appui sur une bague 24. On notera que ce même dispositif de précharge automatique à manchon et ressort peut être placé aussi entre les deux roulements du palier 29.

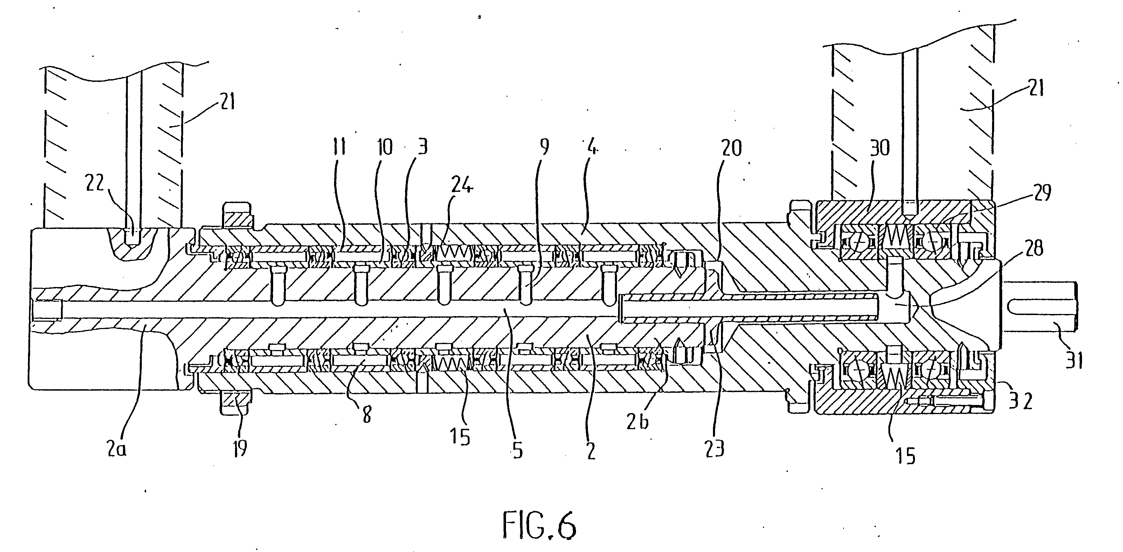

De façon similaire la figure 6 montre que la broche peut être équipée du dispositif de précharge automatique illustré à la figure 2 dans lequel un ressort soufflet 15 est disposé dans une chambre annulaire entre un roulement et une bague 24. De la même façon que précé demment ce dispositif de précharge automatique à ressort peut aussi être placé entre les roulements du palier 29. Il va de soi que l'on peut utiliser ou non, au niveau du palier 29 un dispositif de précharge automatique à manchon ou à soufflet, différent de celui monté sur l'arbre central, ou l'utiliser même si le corps de broche n'en est pas équipé. On dispose ainsi d'une variété d'équipements possibles de dispositifs de précharge automatique, en fonction des besoins.

Grâce aux dispositions ainsi décrites, les broches présentent un maximum de rigidité, permettant de prolonger la durée de vie des molettes et une conservation parfaite des profils. On peut aussi, si nécessaire, substituer ou associer un graissage à la graisse au graissage par brouillard d'huile décrit précédemment.

## Revendications

1.- Broche d'entraînement en rotation d'un outil de précision notamment pour fonctionnement à grande vitesse, comportant un corps de broche tournant en forme de cylindre monté par l'intermédiaire d'organes de roulements séparés par des entretoises sur au moins un support fixe solidaire du bâti de la machine et comportant des moyens assurant la précharge des roulements, caractérisée en ce que le corps de broche tournant (4) vient en appui sur une pluralité d'organes de roulements (3) emmanchés de façon régulièrement répartie, sur toute la longueur d'un arbre central (2) coaxial audit corps de broche, et symétriquement de part et d'autre de son plan médian transversal M, en ce que toutes les chambres annulaires (8) de même longueur séparant l'arbre (2) du corps de broche (4), délimitées axialement par deux organes de roulement voisins (3), servent de logement à une entretoise interne (10) en forme de bague en appui contre la paroi extérieure de l'arbre central (2) ainsi qu'à une entretoise externe (11) de même dimension que l'entretoise interne qui est également en forme de bague coaxiale à la première et qui vient en appui contre la paroi intérieure du corps de broche (4) et en ce que l'arbre central est muni de conduits (5, 9) d'injection en surpression de fluide de graissage aux roulements.

2.- Broche selon la revendication 1, caractérisée en ce que les organes de roulement (3) sont des roulements à billes à contact oblique préchargés par les entretoises (10, 11) et orientés symétriquement par rapport au plan médian transversal M.

3.- Broche selon la revendication 1, utilisant un ressort comme moyen complémentaire de précharge automatique compensant l'usure des roulements, caractérisée en ce que au moins un ressort (15, 27) est logé dans la chambre annulaire centrale (8) de part et d'autre du plan médian M entre deux organes de roulements voisins (3).

4.- Broche selon les revendications 1 et 3, caractérisée en ce que le ressort est un ressort soufflet (15), enveloppant l'entretoise interne (10), en appui d'un côté contre un organe de roulement (3) et de l'autre contre une bague externe (24) réglable axialement.

5.- Broche selon les revendications 1 et 3, caractérisée en ce que le ressort (27) est logé à l'intérieur d'un manchon coulissant (26) appuyé contre un organe de roulement (3), le ressort étant lui-même en appui de l'autre côté contre une bague externe (24) réglable axialement.

6.- Broche selon la revendication 1, caractérisée en ce que les deux extrémités de l'arbre central (2) se terminent par un orifice évasé (6) communiquant avec le conduit (5), l'arbre étant maintenu entre pointes par ses deux extrémités.

7.- Broche selon la revendication 1, caractérisée en ce qu'une seule extrémité (2a) de l'arbre central (2) est solidaire d'un élément de bâti fixe (21).

8.- Broche selon les revendications 1 et 7, caractérisée en ce que l'extrémité opposée (2b) de l'arbre central (2) porte un guide (23) qui prolonge le conduit (5) et s'étend à l'intérieur d'une chambre (28) coaxiale au corps de broche (4).

9.- Broche selon les revendications 1, 7 et 8, caractérisée en ce que l'extrémité du corps de broche (4) tourne dans un palier (29) à roulements à billes, logé dans un support fixe (30), et en ce que la chambre (28) communique avec ledit palier.

10.- Broche selon les revendications 3 et 9, caractérisée en ce que le palier (29) renferme entre ses roulements un moyen complémentaire de précharge automatique mettant en oeuvre un ressort (15, 27).

16
6
17
18
3
M
4
10
11
3
8
9
5
8
1
2
7
12
14
13
19
6
FIG.1

M
4
3
24
11
10
2
5
25
27
26

FIG. 3

M
4
3
8
24
11
10
2
5
25
15

FIG. 2

21
29
28
31
32
30
20
23
2b
4
2
9
5
3
10
8
11
19
21
22
2a

FIG.4

21
29
28
31
32
26
30
27
20
23
2b
4
2
9
5
24
26
3
27
10
8
11
19
21
22
2a

FIG. 5

31
28
29
21
32
15
30
20
23
2b
4
2
9
5
24
15
3
10
8
11
19
21
22
2a

FIG. 6

Office européen des brevets

# RAPPORT DE RECHERCHE EUROPEENNE

Numero de la demande

EP 88 40 3232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y<br>A | US-A-3 247 621 (ALLER)<br>--- | 1-3<br>9 | B 23 Q 1/26<br>B 24 B 41/04<br>F 16 C 35/12<br>F 16 C 25/06<br>B 23 Q 1/08 |
| Y<br>A | FR-A-1 378 103 (WATELET)<br>--- | 1-3<br>5 | |
| A | DE-C- 582 962 (VEREINIGTE KUGELLAGERFABRIKEN)<br>--- | 1-5 | |
| A | DE-A-3 532 116 (HÖFLER)<br>--- | 1,6 | |
| A | US-A-3 673 743 (GIARDINI)<br>--- | 1,6,9 | |
| A | DE-C- 889 103 (SEITZ)<br>--- | 7 | |
| A | DE-U-8 519 451 (HOESCH)<br>--- | 1 | |
| A | FR-A- 625 059 (JUNG)<br>--- | 1 | |
| A | US-A-1 860 614 (HOHNHORST)<br>--- | 1 | DOMAINES TECHNIQUES RECHERCHES (Int. Cl.4) |
| A | US-A-1 715 835 (HOHNHORST)<br>----- | 1 | B 23 Q<br>B 24 B<br>F 16 C |

Le présent rapport a été établi pour toutes les revendications

| Lieu de la recherche | Date d'achèvement de la recherche | Examinateur |
|---|---|---|
| LA HAYE | 05-04-1989 | DE GUSSEM J.L. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)